# EUROPEAN PATENT APPLICATION

(11) **EP 4 653 250 A1**
(43) Date of publication of application: **26.11.2025**
(21) Application number: 24177688.9
(22) Date of filing: 23.05.2024
(51) Int. Cl.: B60L 53/62, B60L 58/13

(54) **INDICATING CHARGING STATUS OF A BATTERY**

(71) Applicant: Volvo Construction Equipment AB, 631 85 Eskilstuna (SE)
(72) Inventor: Örkenrud, Kim, 352 64 Växjö (SE); Ekman, Gordon, 342 63 Moheda (SE); Kvist, Roland, 360 42 Braås (SE)
(74) Representative: Valea AB

(57) **Abstract**

A computer system (600) comprising processing circuitry (602) configured to indicate a charging status of a battery (20) of a vehicle (1) to one or more candidate operators (41) of the vehicle (1) is provided. The battery (20) is adapted to be charged connected to a charging unit (30). The processing circuitry (602) is configured to obtain a charging status of the battery (20) of the vehicle (1). The processing circuitry (602) is configured to determine, based on the charging status, whether the charging status is sufficient for the vehicle (1) to perform the one or more preset operations. The processing circuitry (602) is configured to, upon determining that the charging status is sufficient for the vehicle (1) to perform the one or more preset operations, issue a signal to one or more receiving units (40), each receiving unit (40) being associated with one candidate operator (41) of the one or more candidate operators (41).

## Description

### TECHNICAL FIELD

The disclosure relates generally to managing vehicle status. In particular aspects, the disclosure relates to indicating charging status of a battery of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An operator of an electric vehicle needs to wait for the vehicle to charge before being able to use the vehicle for its intended purpose. The charging may sometime take considerable time where the operators typically take breaks or perform other actions. To know the charging status, a charging unit of the vehicle may be associated with a light indicating when the vehicle is fully charged. To know the percentage of the battery charge, the operator may need to turn on the ignition and read the charge from a dash board of the vehicle, or there may be a light indicator on the charging unit.

However, the information may not be immediately present to the operator and may not be in line of sight of the operator who may be elsewhere taking a break or performing other operations.

Since the operator may want to initiate operations before reaching a full charge, the operator needs to regularly check the dash board or charger for the charge of the vehicle which takes time and is inefficient. Furthermore, the operator needs to speculate whether a fractional charge is sufficient to perform a certain operation of the vehicle. Such speculations are error prone and risk having the operator being stranded due to underestimation, or having the operator waiting too long for the battery to charge if overestimating a charge percentage needed.

Furthermore, the operator may be on a break and cannot be expected to keep track of the charging status and to monitor whether the vehicle can be utilized or not for certain operations.

Further problems increase when multiple operators share a pool of vehicles used to perform certain actions as it takes even more time to inspect charging status of multiple vehicles.

Hence, there is a need to improve efficiency of handling charging status of a vehicle.

### SUMMARY

According to a first aspect of the disclosure, a computer system comprising processing circuitry configured to indicate a charging status of a battery of a vehicle to one or more candidate operators of the vehicle is provided. The battery is adapted to be charged by being connected to a charging unit separate from the vehicle.

The processing circuitry is configured to obtain a charging status of the battery of the vehicle.

The processing circuitry is configured to determine, based on the charging status, whether the charging status is sufficient for the vehicle to perform the one or more preset operations.

The processing circuitry is configured to, upon determining that the charging status is sufficient for the vehicle to perform the one or more preset operations, issue a signal to one or more receiving units. Each receiving unit is associated with one candidate operator of the one or more candidate operators.

The first aspect of the disclosure may seek to improve efficiency of handling charging status of a vehicle.

A technical benefit may include that the one or more candidate operators are not required to inspect the dashboard or charger of the vehicle to obtain a current charge of the battery, furthermore the one or more candidate operators do not need to remember the charge percentage needed for the operations to be performed, instead the signal issued to each of the one or more receiving units will indicate to the one or more candidate operators that the charging status is sufficient to perform the one or more preset operations.

In other words, the battery may be charged, and the one or more candidate operators may in the meantime perform work elsewhere or may take a break, and still be immediately informed when the battery has charged to have a sufficient charge to perform the one or more preset operations. Any one of the one or more candidate operators can then use the vehicle to perform said the one or more preset operations.

Optionally in some examples, including in at least one preferred example, obtaining the charging status comprises obtaining one or more values indicative of any one or more of:
- a State of Charge (SoC) of the battery,
- a remaining time and/or charge until the battery is fully charged or until charged with at least a predefined charge,
- an expected time until charged with the at least a predefined charge, and
- a percentage of charge in the battery.

A technical benefit may include improved efficiency in handling charging status of the vehicle. This is since the charging status may flexibly be represented by any one or more of the above-mentioned alternatives. It follows that whether the charging status is sufficient for the vehicle to perform the one or more preset operations may be determined more accurately thereby enabling more efficient handling of charging status.

Optionally in some examples, including in at least one preferred example, determining that the charging status is sufficient for the vehicle to perform the one or more preset operations comprises determining that the charging status is associated with a minimal charge needed to perform the one or more preset operations, which minimal charge is less than a maximum capacity of the battery.

A technical benefit may include improved efficiency in handling charging status of the vehicle. This is since it may be determined that the charging status is sufficient for the vehicle to perform the one or more preset operations before the battery is fully charged. This means that an operator can be notified as soon as the vehicle is ready to perform the one or more preset operations.

Optionally in some examples, including in at least one preferred example, the processing circuitry is configured to select the one or more receiving units from a set of receiving units. In these examples, each receiving unit is associated with a respective operator. Purely by way of example, the processing circuitry may be configured to select the one or more receiving units from the set of receiving units and to issue the signal only the selected one or more receiving units.

A technical benefit may include improved efficiency in handling charging status of the vehicle. This is since a most optimal receiving unit can be selected such that a most suitable candidate operator will be notified of that the charging status is sufficient for the vehicle to perform the one or more preset operations. For example, the receiving unit associated with an operator closest in distance or time may be selected.

Optionally in some examples, including in at least one preferred example, the processing circuitry is configured to select the one or more receiving units based on a predefined assignment of operators allowed to operate the vehicle, and/or based on a predefined assignment of operators allowed to perform the one or more preset operations.

A technical benefit may include improved efficiency in handling charging status of the vehicle. This is since only operators allowed to operate the vehicle and/or to perform the one or more preset operations may be notified of that the charging status is sufficient for the vehicle to perform the one or more preset operations.

Optionally in some examples, including in at least one preferred example, the processing circuitry is configured to select the one or more receiving units based on an availability of respective operators associated with the receiving units, and/or based on a time schedule of the respective operators associated with the receiving units.

A technical benefit may include improved efficiency in handling charging status of the vehicle. This is since only operators available and/or operators closest in time based on their time schedule may be notified of that the charging status is sufficient for the vehicle to perform the one or more preset operations.

Optionally in some examples, including in at least one preferred example, the time schedule of the respective operators indicates when the respective operators have idle time and/or are scheduled to have a break.

A technical benefit may include improved efficiency in handling charging status of the vehicle. This is since operators which have shortest time until their idle time or break schedule is ending may be notified of that the charging status is sufficient for the vehicle to perform the one or more preset operations. It follows that operators ending their break or idle time may always know which vehicle it can operate and perform the one or more preset operations. It further follows that idle time for when the vehicle can be operated to perform the one or more preset operations, until an operator use the vehicle to perform the one or more preset operations, is minimized, thereby improving efficiency.

Optionally in some examples, including in at least one preferred example, the processing circuitry further is configured to, upon determining that the charging status is not sufficient for the vehicle to perform the one or more preset operations, predict a time when the charging status will be sufficient for the vehicle to perform the one or more preset operations. In these examples, the processing circuitry is configured to select the one or more receiving units based on the predicted time and the time schedule of the respective operators.

A technical benefit may include improved efficiency in handling charging status of the vehicle. This is since receiving units and their associated operators may speculatively be selected on their most likely best schedule to operate the vehicle and to perform the one or more preset operations.

Optionally in some examples, including in at least one preferred example, the time schedule indicates when respective break times for the respective operators are scheduled to end, and wherein the processing circuitry is configured to select a receiving unit from a set of receiving units based on which operator of the respective operators has a break time ending closest to the predicted time, and/or closest in time after the predicted time.

A technical benefit may include improved efficiency in handling charging status of the vehicle. This is since the prediction may further account for when the operators are able to first operate the vehicle and perform the one or more preset operations, with respect to their idle or break time.

Optionally in some examples, including in at least one preferred example, the processing circuitry is further configured to issue a signal to one or more receiving units indicative of the time when the charging status will be sufficient.

A technical benefit may include improved efficiency in handling charging status of the vehicle. This is since the associated operators of the one or more receiving units may plan their actions such as break or idle times accordingly, or other work tasks may be assigned such that they are finished when the charging status will be sufficient for the vehicle to perform the one or more preset operations.

Optionally in some examples, including in at least one preferred example, the one or more preset operations comprises an operation of transporting a set payload along to along a set route.

A technical benefit may include improved efficiency in handling charging status of the vehicle. This is since the charging status may be based on a determination of how much power is needed to transport the set payload along to along the set route.

Optionally in some examples, including in at least one preferred example, the processing circuitry is further configured to obtain the one or more preset operations as input, preferably as a user input.

A technical benefit may include improved efficiency in handling charging status of the vehicle. This is since the one or more preset operations may be dynamically entered, and thereby the charging status may adapt accordingly to what operations shall be performed.

Optionally in some examples, including in at least one preferred example, the processing circuitry is further configured to, in response to obtaining the one or more preset operations, determine a required SoC of the battery. In these examples, the processing circuitry is configured to determine whether the charging status is sufficient for the vehicle to perform the one or more preset operations by determining whether or not a current SoC of the battery meets the required SoC of the battery.

A technical benefit may include improved efficiency in handling charging status of the vehicle. This is since the required SoC of the battery may be dynamically determined and the signal may be issued only when a current SoC meets the required SoC.

According to a second aspect of the disclosure, a vehicle comprising a battery is provided. The battery is arranged to be charged using a charging unit separate from the vehicle. The vehicle further comprises and/or being controlled by the computer system according to the first aspect.

According to a third aspect of the disclosure, a computer-implemented method for indicating a charging status of a battery of a vehicle to one or more candidate operators of the vehicle is provided. The battery is adapted to be charged by being connected to a charging unit separate from the vehicle.

The method comprises, by a processing circuitry of a computer system, obtaining a charging status of the battery of the vehicle.

The method comprises, by the processing circuitry, determining based on the charging status, whether the charging status is sufficient for the vehicle to perform the one or more preset operations.

The method comprises, by the processing circuitry, upon determining that the charging status is sufficient for the vehicle to perform the one or more preset operations, issuing a signal to one or more receiving units. Each receiving unit is associated with one candidate operator of the one or more candidate operators.

Optionally in some examples, including in at least one preferred example, the method comprises, by the processing circuitry, obtaining the one or more preset operations as input, preferably as a user input, and, in response to obtaining the one or more preset operations.

Optionally in some examples, including in at least one preferred example, the method comprises, determining a required SoC of the battery and wherein determining whether the charging status is sufficient for the vehicle to perform the one or more preset operations comprises determining whether or not a current SoC of the battery meets the required SoC of the battery.

Optionally in some examples, including in at least one preferred example, the method comprises, by the processing circuitry, selecting the one or more receiving units from a set of receiving units, where each receiving unit is associated with a respective operator.

Optionally in some examples, including in at least one preferred example, the method comprises, by the processing circuitry, upon determining that the charging status is not sufficient for the vehicle to perform the one or more preset operations, predicting a time when the charging status will be sufficient for the vehicle to perform the one or more preset operations. In these examples, the prediction may be based on an availability of respective operators associated with the receiving units, and/or the prediction may be based on a time schedule of the respective operators associated with the receiving units. In these examples, selecting the one or more receiving units may be based on the predicted time and the time schedule of the respective operators.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

**FIG. 1** is an exemplary vehicle according to an example.
**FIG. 2** is an exemplary scenario according to an example.
**FIG. 3** is an exemplary flow chart of a method according to an example.
**FIG. 4** is another view of **FIG. 1**, according to an example.
**FIG. 5** is a flow chart of an exemplary according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein may relate to more efficiently and flexibly indicate charging status of a vehicle with respect to its battery, in particular if the vehicle can operate one or more preset operations when powered by the battery.

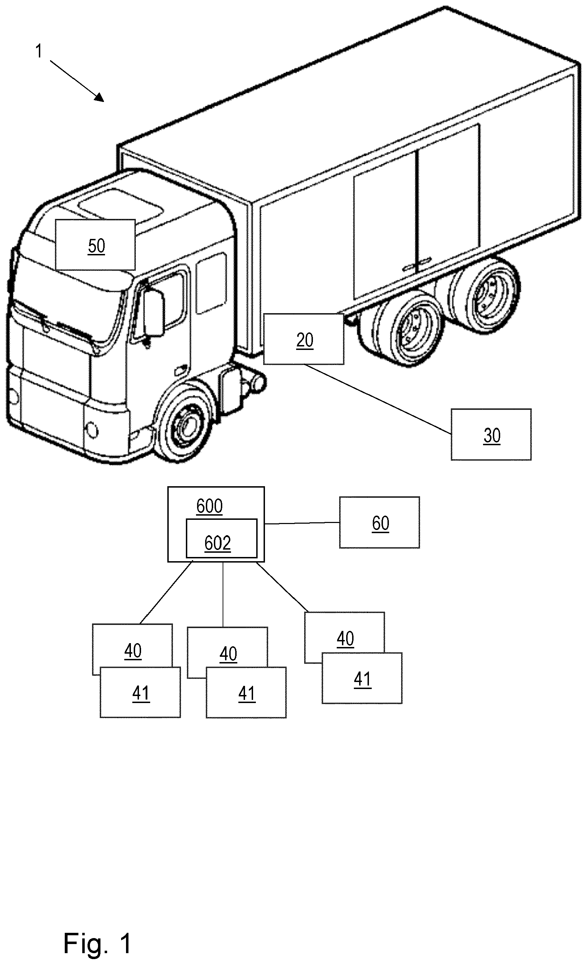

**FIG. 1** illustrates an exemplary **vehicle 1** according to an example.

The vehicle 1 may be any suitable vehicle, e.g., any one out of a car, a truck, a bus, and a heavy-duty vehicle. In some examples, the vehicle 1 is a truck such as a dump truck arranged for loading, hauling and dumping materials.

The vehicle 1 may be an electrically powered vehicle.

The vehicle 1 comprises a **battery 20**, e.g., for powering operations of the vehicle 1.

In examples herein, the battery 20 may be adapted to be charged by being connected to a **charging unit 30** separate from the vehicle 1.

Examples herein may specifically relate to determining based on charging status of the battery 20, whether the charging status, e.g., charging level, is sufficient for the vehicle 1 to perform one or more preset operations. The one or more preset operations may typically relate to transporting a set payload along a set route.

In examples herein, **one or more candidate operators 41** may be available to operate the vehicle 1. In some examples, there is only one candidate operator for the vehicle 1.

Upon determining that the charging status is sufficient for the vehicle 1 to perform the one or more preset operations, examples herein relate to issuing a signal to **one or more receiving units 40**.

Each receiving unit 40 is associated with one candidate operator 41 of the one or more candidate operators 41. The one or more receiving units 40 may typically be pagers or other wireless devices.

The one or more receiving units 40 may typically be configured to use a local wireless communications such that they can function where there are not any telecommunications networks such as in quarries, mines, underground, in mountainous areas, etc.

The signal may indicate that the vehicle 1 may be capable and/or ready to perform the one or more preset operations.

A **time schedule 60** of respective operators associated with the receiving units 40 may form part of examples herein. The time schedule 60 may indicate when the respective operators have idle time and/or are scheduled to have a break. Therefore the issued signal may be transmitted only to candidate operators 40 which are closest available in time according to the time schedule 60.

Examples herein may be performed by a **computer system 600** and/or a **processing circuitry 602** therein.

The computer system 600 and/or the processing circuitry 602 therein may be comprised in the vehicle 1 and/or remote to the vehicle 1 such as part of a server or a cloud service.

In some examples, the computer system 600 and/or the processing circuitry 602 may be or may comprises an Electronic Control Unit (ECU) for controlling the vehicle 1.

In some examples, the computer system 600 and/or the processing circuitry 602 therein may be communicatively coupled with, and/or capable of controlling any suitable entity of the vehicle 1. For example, the computer system 600 and/or the processing circuitry 602 may be able to obtain charging status of the battery 20.

The vehicle 1 may comprise a **wireless transceiver 50**, e.g., part of a local wireless communications network such as a Wi-Fi mesh network. The wireless transceiver 50 may be used in examples herein for communications with the one or more receiving units 40. When comprised in the vehicle 1, the computer system 600 and/or the processing circuitry 602 may use the wireless transceiver 50 for communication with the one or more receiving units 40.

When remote to the vehicle 1, the computer system 600 and/or the processing circuitry 602 therein may obtain any suitable information, e.g., charging status, as transmitted from the vehicle 1 by the wireless transceiver 50.

For example, a Battery Management System (BMS) in the vehicle 1 may transmit charging status information regarding any one or more of: state-of-charge, remaining charging time and completed charging to the computer system 600 and/or the processing circuitry 602.

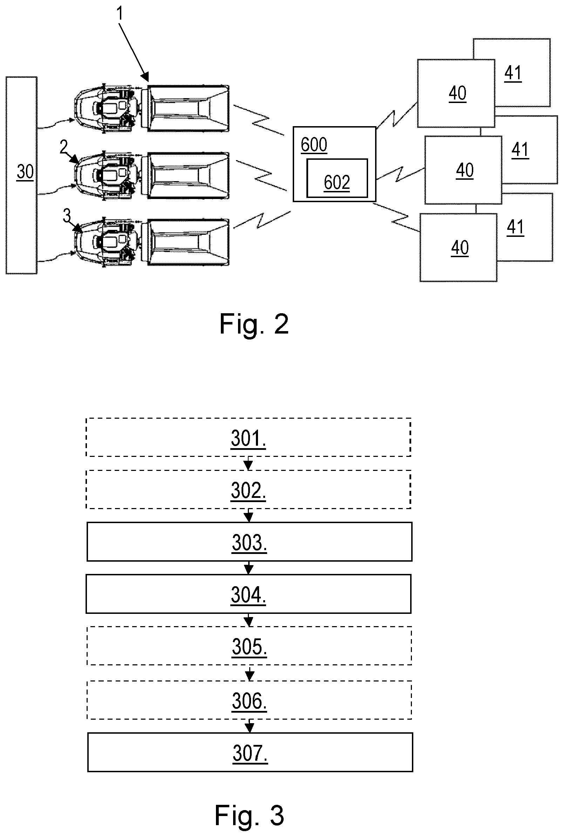

**FIG. 2** is an exemplary scenario according to an example.

The charging unit 30 may charge multiple vehicles at the same time, e.g., the vehicle 1, a **second vehicle 2** and a **third vehicle 3.**

The computer system 600 and/or the processing circuitry 602 therein may be capable of detecting when any of the vehicles 1, 2, 3, have sufficient charging status to perform the one or more preset operations by any suitable means, e.g., by polling the charging status from the respective vehicle or the charging unit 30, or by measuring the charging status using a sensor in each respective vehicle.

When any of the vehicles 1, 2, 3, have sufficient charging status to perform the one or more preset operations, such as the vehicle 1, the computer system 600 and/or the processing circuitry 602 therein may be configured to issue a signal to any one or more out of the one or more receiving units 40 which may further notify their respective candidate operator 41 of that the respective vehicle is ready to perform the one or more preset operations.

Any of the vehicles 1, 2, 3, may be part of a wireless communications network such as a Wi-Fi mesh network which may further be connected with the one or more receiving units 40, which may be a pager system.

The computer system 600 and/or the processing circuitry 602 therein may be part of a control system arranged to collect data from the vehicles 1, 2, 3, e.g., charging status of the respective vehicles and may further consider the time schedule 60. The control system may analyze the data and calculate an optimal timing and combination of candidate operator 41 and vehicle out of the vehicles 1, 2, 3 such as the vehicle 1. The respectively receiving units 40, e.g., pager, are then alerted. Finally, the respective receiving unit 40 may alert or inform the candidate operator 41.

The number of vehicles 1, 2, 3, may be the same or different as the number of candidate operators 41. The number difference will affect how often all vehicles 1, 2, 3, may be at use at the same time.

**FIG. 3** is an exemplary flow chart of a method for indicating a charging status of the battery 20 of the vehicle 1 to the one or more candidate operators 41 of the vehicle 1. The battery 20 is adapted to be charged by being connected to the charging unit 30. The charging unit 30 is separate from the vehicle 1. The method may be performed by the computer system 600 and/or the processing circuitry 602 therein. The method may comprise the following actions which may be taken in any suitable order. Dashed boxes in **FIG. 3** may indicate optional actions.

### Action 301

The method may comprise, obtaining the one or more preset operations as input, preferably as a user input, e.g., by input into a dashboard of the vehicle 1 or by use of any other suitable input such as by using a wireless device, e.g., the one or more receiving units 40, to input the one or more preset operations.

The one or more preset operation may comprise operations to be performed by the vehicle 1, when powered by the battery 20.

The one or more preset operations may comprise an operation of transporting a set payload along to along a set route.

In actions below, if not obtained as an input, the one or more preset operations may instead be predefined in any suitable manner.

### Action 302

The method may comprise determining a required SoC of the battery 20.

The action may be performed in response to obtaining the one or more preset operations, e.g., as in action 301.

In other words, the one or more preset operations may be dynamically entered as input, e.g., as part of action 301, and the required SoC may then be determined with respect to how much charge is needed to perform the one or more preset operations. The required SoC may use any suitable calculation model such as a predefined model to determine the required SoC. The required SoC may be a percentage of the maximum SoC of the battery 20.

Determining that the charging status is sufficient for the vehicle 1 to perform the one or more preset operations may comprise determining that the charging status is associated with a minimal charge needed to perform the one or more preset operations. The minimal charge may in these examples be less than a maximum capacity of the battery 20.

### Action 303

The method comprises obtaining a charging status of the battery 20 of the vehicle 1.

In some examples, obtaining the charging status comprises obtaining one or more values indicative of any one or more out of
- a SoC of the battery 20 such as a current SoC of the battery 20,
- a remaining time and/or charge until the battery 20 is fully charged or until charged with at least a predefined charge,
- an expected time until charged with the at least a predefined charge, and
- a percentage of charge in the battery 20.

In other words, the charging status may be measured and/or quantified in various ways and is not limited to any one metric.

The action may in some examples further comprise obtaining charging status of multiple vehicles out of the vehicles 1, 2, 3.

### Action 304

The method comprises determining, based on the charging status, whether the charging status is sufficient for the vehicle 1 to perform the one or more preset operations.

The determination may be based on a predefined model or heuristics with respect to the one or more preset operations.

In some examples, determining whether the charging status is sufficient for the vehicle 1 to perform the one or more preset operations comprises determining whether or not a current SoC of the battery 20 meets the required SoC of the battery 20, e.g., as determined in action 302.

The action may in some examples further comprise determining, based on the charging status, whether the charging status is sufficient for any other vehicle of the vehicles 1, 2, 3 to perform the one or more preset operations.

### Action 305

The method may comprise, upon determining that the charging status is not sufficient for the vehicle 1 to perform the one or more preset operations, predict a time when the charging status will be sufficient for the vehicle 1 to perform the one or more preset operations. In some examples, the prediction may further also be made for any of the other vehicles out of the vehicles 1, 2, 3.

The prediction may be based on any suitable predefined model such as a statistical model, e.g., a neural network or other machine learning model.

The prediction may be based on a current rate of charging the battery 20 and/or based on charging capacity of the charging unit 30.

### Action 306

The method may comprise selecting the one or more receiving units 40 from a set of receiving units. Each receiving unit 40 is associated with a respective operator.

In some examples, as also discussed with respect to **FIG. 1**, the time schedule 60 indicates when respective break times for the respective operators are scheduled to end, and/or the time schedule 60 of the respective operators indicates when the respective operators have idle time and/or are scheduled to have a break.

When the break time is used as a basis for selection, the operator just about to finish, or the operator most recently which have finished their respective break, may be have their respective receiving unit to be selected.

Selecting the one or more receiving units 40 may be based on the time schedule 60 of the respective operators associated with the one or more receiving units 40.

In some examples, selecting the one or more receiving units 40 is based on the predicted time and the time schedule 60 of the respective operators.

In some of examples selecting the one or more receiving units 40 may comprise selecting a receiving unit from a set of receiving units based on which operator of the respective operators has a break time ending closest to the predicted time, and/or closest in time after the predicted time. For example, a time schedule of a respective operator may be within an interval of the predicted time for the respective receiving unit to be selected.

In some of examples, selecting the one or more receiving units 40 may be based on a predefined assignment of operators allowed to operate the vehicle 1.

In some of examples, selecting the one or more receiving units 40 may be based on a predefined assignment of operators allowed to perform the one or more preset operations.

In some of examples, selecting the one or more receiving units 40 may comprise selecting the one or more receiving units 40 based on an availability of respective operators associated with the receiving units 40.

### Action 307

The method comprises, upon determining that the charging status is sufficient for the vehicle 1 to perform the one or more preset operations, issuing a signal to one or more receiving units 40. Each receiving unit 40 is associated with one candidate operator 41 of the one or more candidate operators 41. The signal may indicate that the vehicle 1 is ready to perform the one or more preset operations.

In this way, the one or more candidate operators 41 may be notified of that the vehicle may perform the one or more preset operations.

Since the time schedule is used as a basis for selection, e.g., in action 306, a candidate operator most suitable in time may be notified by their respective receiving unit, thereby not wasting time charging the battery 20 too long and ensuring that the operator can be efficient.

When the time which when the charging status will be sufficient for the vehicle 1 to perform the one or more preset operations is predicted, the signal may be issued speculatively to indicate to the one or more candidate operators when the can use the vehicle to perform the one or more preset operations, and thereby ensure that productivity can be thoroughly planned such that no unnecessary stops in production is needed.

In some examples, upon determining that the charging status is not sufficient for the vehicle 1 to perform the one or more preset operations, and determining that the charging status is sufficient for the second vehicle 2 to perform the one or more preset operations, issuing a signal to one or more receiving units 40. The signal may indicate that the second vehicle 2 is ready to perform the one or more preset operations.

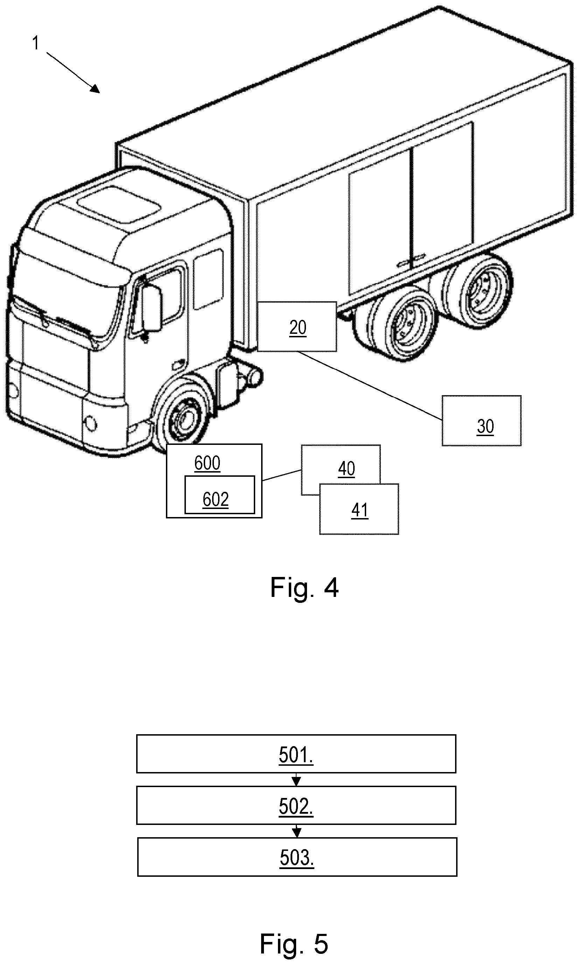

**FIG. 4** is another view of **FIG. 1**, according to an example. The computer system 600 comprising the processing circuitry 602 configured to indicate a charging status of the battery 20 of the vehicle 1 to one or more candidate operators 41 of the vehicle 1 is provided. The battery 20 is adapted to be charged by being connected to a charging unit 30 separate from the vehicle 1.

The processing circuitry 602 is configured to, obtain a charging status of the battery 20 of the vehicle 1.

The processing circuitry 602 is configured to, determine based on the charging status, whether the charging status is sufficient for the vehicle 1 to perform the one or more preset operations.

The processing circuitry 602 is configured to, upon determining that the charging status is sufficient for the vehicle 1 to perform the one or more preset operations, issue a signal to one or more receiving units 40. Each receiving unit 40 is associated with one candidate operator 41 of the one or more candidate operators 41.

**FIG. 5** is a flow chart of an exemplary computer-implemented method for indicating a charging status of the battery 20 of the vehicle 1 to the one or more candidate operators 41 of the vehicle 1 according to an example. The battery 20 is adapted to be charged by being connected to the charging unit 30 separate from the vehicle 1. The method comprises the below actions which may be combined with any of the above actions or examples in any suitable manner.

### Action 501

The method comprises, by the processing circuitry 602 of the computer system 600, obtaining a charging status of the battery 20 of the vehicle 1.

### Action 502

The method comprises, by the processing circuitry 602, determining based on the charging status, whether the charging status is sufficient for the vehicle 1 to perform the one or more preset operations.

### Action 503

The method comprises, by the processing circuitry 602 of the computer system 600, by the processing circuitry 602, upon determining that the charging status is sufficient for the vehicle 1 to perform the one or more preset operations, issuing a signal to one or more receiving units 40. Each receiving unit 40 is associated with one candidate operator 41 of the one or more candidate operators 41.

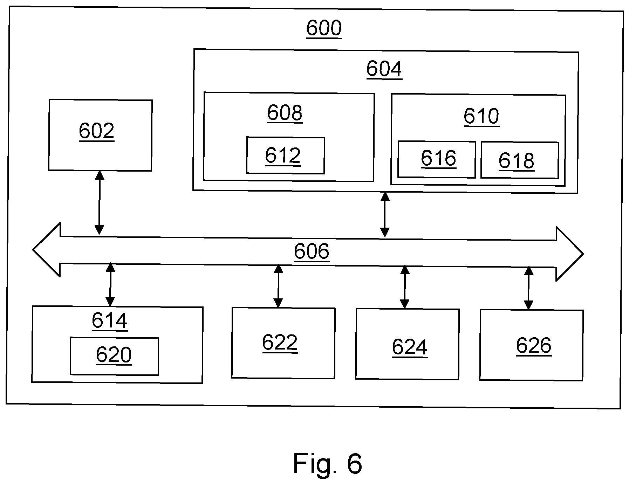

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604**, and a system bus **606**. The computer system **600** may include at least one computing device having the processing circuitry **602**. The system bus **606** provides an interface for system components including, but not limited to, the memory **604** and the processing circuitry **602**. The processing circuitry **602** may include any number of hardware components for conducting data or signal processing or for executing computer code stored in memory **604**. The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602**. A basic input/output system (BIOS) **612** may be stored in the non-volatile memory **608** and can include the basic routines that help to transfer information between elements within the computer system **600**.

The computer system **600** may further include or be coupled to a non-transitory computer-readable storage medium such as the storage device **614**, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610**, which may include an operating system **616** and/or one or more program modules **618**. All or a portion of the examples disclosed herein may be implemented as a computer program **620** stored on a transitory or non-transitory computer-usable or computer-readable storage medium (e.g., single medium or multiple media), such as the storage device **614**, which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602**. In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602**. The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

A number of Example 1-20 follows below, which Examples may be combined with any one or more out of the above examples in any suitable manner.
Example 1. A computer system 600 comprising processing circuitry 602 configured to indicate a charging status of a battery 20 of a vehicle 1 to one or more candidate operators 41 of the vehicle 1, wherein the battery 20 is adapted to be charged by being connected to a charging unit 30 separate from the vehicle 1, the processing circuitry 602 is configured to:
   - obtain a charging status of the battery 20 of the vehicle 1,
   - determine based on the charging status, whether the charging status is sufficient for the vehicle 1 to perform the one or more preset operations,
   - upon determining that the charging status is sufficient for the vehicle 1 to perform the one or more preset operations, issue a signal to one or more receiving units 40, each receiving unit 40 being associated with one candidate operator 41 of the one or more candidate operators 41.
Example 2. The computer system 600 of Example 1, wherein obtaining the charging status comprises obtaining one or more values indicative of any one or more out of
   - a SoC of the battery 20,
   - a remaining time and/or charge until the battery 20 is fully charged or until charged with at least a predefined charge,
   - an expected time until charged with the at least a predefined charge, and
   - a percentage of charge in the battery 20.
Example 3. The computer system 600 of Example 1 or 2, wherein determining that the charging status is sufficient for the vehicle 1 to perform the one or more preset operations comprises determining that the charging status is associated with a minimal charge needed to perform the one or more preset operations, which minimal charge is less than a maximum capacity of the battery 20.
Example 4. The computer system 600 of any of Examples 1-3, wherein the processing circuitry 602 is configured to select the one or more receiving units 40 from a set of receiving units, each receiving unit 40 being associated with a respective operator.
Example 5. The computer system 600 of Example 4, wherein the processing circuitry 602 is configured to select the one or more receiving units 40 based on a predefined assignment of operators allowed to operate the vehicle 1, and/or wherein the processing circuitry 602 is configured to select the one or more receiving units 40 based on a predefined assignment of operators allowed to perform the one or more preset operations.
Example 6. The computer system 600 of any of Example 4-5, wherein the processing circuitry 602 is configured to select the one or more receiving units 40 based on an availability of respective operators associated with the receiving units 40, and/or based on a time schedule 60 of the respective operators associated with the receiving units 40.
Example 7. The computer system 600 of Example 6, wherein the time schedule 60 of the respective operators indicates when the respective operators have idle time and/or are scheduled to have a break.
Example 8. The computer system 600 of Example 6 or 7, wherein the processing circuitry 602 further is configured to:
   - upon determining that the charging status is not sufficient for the vehicle 1 to perform the one or more preset operations, predict a time when the charging status will be sufficient for the vehicle 1 to perform the one or more preset operations; and
   - select the one or more receiving units 40 based on the predicted time and the time schedule 60 of the respective operators.
Example 9. The computer system 600 of Example 8, wherein the time schedule 60 indicates when respective break times for the respective operators are scheduled to end, and wherein the processing circuitry 602 is configured to select a receiving unit 40 from a set of receiving units based on which operator of the respective operators has a break time ending closest to the predicted time, and/or closest in time after the predicted time.
Example 10. The computer system 600 of Example 8 or 9, wherein the processing circuitry 602 is further configured to issue a signal to one or more receiving units 40 indicative of the time when the charging status will be sufficient.
Example 11. The computer system 600 of any of Examples 1-10, wherein the one or more preset operations comprises an operation of transporting a set payload along to along a set route.
Example 12. The computer system 600 of any of Examples 1-11, wherein the processing circuitry 602 is further configured to obtain the one or more preset operations as input, preferably as a user input.
Example 13. The computer system 600 of Example 12, wherein the processing circuitry 602 is further configured to, in response to obtaining the one or more preset operations, determine a required SoC of the battery 20 and wherein determining whether the charging status is sufficient for the vehicle 1 to perform the one or more preset operations comprises determining whether or not a current SoC of the battery 20 meets the required SoC of the battery 20.
Example 14. A vehicle 1 comprising a battery 20 arranged to charge the battery 20 and further comprising and/or being controlled by the computer system 600 of any of Examples 1-13.
Example 15. A computer-implemented method for indicating a charging status of a battery 20 of a vehicle 1 to one or more candidate operators 41 of the vehicle 1, wherein the battery 20 is adapted to be charged by being connected to a charging unit 30 separate from the vehicle 1, the method comprising:
   - by a processing circuitry 602 of a computer system 600, obtaining 303, 501 a charging status of the battery 20 of the vehicle 1,
   - by the processing circuitry 602, determining 304, 502 based on the charging status, whether the charging status is sufficient for the vehicle 1 to perform the one or more preset operations,
   - by the processing circuitry 602, upon determining that the charging status is sufficient for the vehicle 1 to perform the one or more preset operations, issuing 307, 503 a signal to one or more receiving units 40, each receiving unit 40 being associated with one candidate operator 41 of the one or more candidate operators 41.
Example 16. The method of Example 15, further comprising:
   - by the processing circuitry 602, obtaining 301 the one or more preset operations as input, preferably as a user input, and, in response to obtaining the one or more preset operations, determining 302 a required SoC of the battery 20 and wherein determining whether the charging status is sufficient for the vehicle 1 to perform the one or more preset operations comprises determining whether or not a current SoC of the battery 20 meets the required SoC of the battery 20.
Example 17. The method of Examples 15 or 16, further comprising:
   - by the processing circuitry 602 selecting 306 the one or more receiving units 40 from a set of receiving units, each receiving unit 40 being associated with a respective operator.
Example 18. The method of any of Examples 15 - 17, further comprising,
   - upon determining that the charging status is not sufficient for the vehicle 1 to perform the one or more preset operations, predicting 305 a time when the charging status will be sufficient for the vehicle 1 to perform the one or more preset operations, the prediction being based on an availability of respective operators associated with the receiving units 40, and/or based on a time schedule 60 of the respective operators associated with the receiving units 40; and
   - wherein selecting 306 the one or more receiving units 40 is based on the predicted time and the time schedule 60 of the respective operators.
Example 19. A computer program product comprising program code for performing, when executed by the processing circuitry 602, the method of any of Examples 15-18.
Example 20. A non-transitory computer-readable storage medium comprising instructions, which when executed by the processing circuitry 602, cause the processing circuitry 602 to perform the method of any of Examples 15-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to indicate a charging status of a battery (20) of a vehicle (1) to one or more candidate operators (41) of the vehicle (1), wherein the battery (20) is adapted to be charged by being connected to a charging unit (30) separate from the vehicle (1), the processing circuitry (602) is configured to:
- obtain a charging status of the battery (20) of the vehicle (1),
- determine based on the charging status, whether the charging status is sufficient for the vehicle (1) to perform the one or more preset operations,
- upon determining that the charging status is sufficient for the vehicle (1) to perform the one or more preset operations, issue a signal to one or more receiving units (40), each receiving unit (40) being associated with one candidate operator (41) of the one or more candidate operators (41).

2. The computer system (600) of claim 1, wherein obtaining the charging status comprises obtaining one or more values indicative of any one or more of
- a State of Charge, SoC, of the battery (20),
- a remaining time and/or charge until the battery (20) is fully charged or until charged with at least a predefined charge,
- an expected time until charged with the at least a predefined charge, and
- a percentage of charge in the battery (20).

3. The computer system (600) of claim 1 or 2, wherein determining that the charging status is sufficient for the vehicle (1) to perform the one or more preset operations comprises determining that the charging status is associated with a minimal charge needed to perform the one or more preset operations, which minimal charge is less than a maximum capacity of the battery (20).

4. The computer system (600) of any of claims 1-3, wherein the processing circuitry (602) is configured to select the one or more receiving units (40) from a set of receiving units, each receiving unit (40) being associated with a respective operator, and optionally wherein the processing circuitry (602) is configured to select the one or more receiving units (40) based on a predefined assignment of operators allowed to operate the vehicle (1), and/or wherein the processing circuitry (602) is configured to select the one or more receiving units (40) based on a predefined assignment of operators allowed to perform the one or more preset operations.

5. The computer system (600) of any of claim 4, wherein the processing circuitry (602) is configured to select the one or more receiving units (40) based on an availability of respective operators associated with the receiving units (40), and/or based on a time schedule (60) of the respective operators associated with the receiving units (40), and optionally wherein the time schedule (60) of the respective operators indicates when the respective operators have idle time and/or are scheduled to have a break.

6. The computer system (600) of claim 5, wherein the processing circuitry (602) further is configured to:
- upon determining that the charging status is not sufficient for the vehicle (1) to perform the one or more preset operations, predict a time when the charging status will be sufficient for the vehicle (1) to perform the one or more preset operations; and
- select the one or more receiving units (40) based on the predicted time and the time schedule (60) of the respective operators.

7. The computer system (600) of claim 6, wherein the time schedule (60) indicates when respective break times for the respective operators are scheduled to end, and wherein the processing circuitry (602) is configured to select a receiving unit (40) from a set of receiving units based on which operator of the respective operators has a break time ending closest to the predicted time, and/or closest in time after the predicted time.

8. The computer system (600) of claim 6 or 7, wherein the processing circuitry (602) is further configured to issue a signal to one or more receiving units (40) indicative of the time when the charging status will be sufficient.

9. The computer system (600) of any of claims 1-8, wherein the one or more preset operations comprises an operation of transporting a set payload along to along a set route.

10. The computer system (600) of any of claims 1-9, wherein the processing circuitry (602) is further configured to obtain the one or more preset operations as input, preferably as a user input, and optionally wherein the processing circuitry (602) is further configured to, in response to obtaining the one or more preset operations, determine a required State of Charge, SoC, of the battery (20) and wherein determining whether the charging status is sufficient for the vehicle (1) to perform the one or more preset operations comprises determining whether or not a current SoC of the battery (20) meets the required SoC of the battery (20).

11. A vehicle (1) comprising a battery (20), wherein the battery is arranged to be charged by a charging unit (30) separate from the vehicle (1), and wherein the vehicle further comprises and/or is controlled by the computer system (600) of any of claims 1-10.

12. A computer-implemented method for indicating a charging status of a battery (20) of a vehicle (1) to one or more candidate operators (41) of the vehicle (1), wherein the battery (20) is adapted to be charged by being connected to a charging unit (30) separate from the vehicle (1), the method comprising:
- by a processing circuitry (602) of a computer system (600), obtaining (303, 501) a charging status of the battery (20) of the vehicle (1),
- by the processing circuitry (602), determining (304, 502) based on the charging status, whether the charging status is sufficient for the vehicle (1) to perform the one or more preset operations,
- by the processing circuitry (602), upon determining that the charging status is sufficient for the vehicle (1) to perform the one or more preset operations, issuing (307, 503) a signal to one or more receiving units (40), each receiving unit (40) being associated with one candidate operator (41) of the one or more candidate operators (41).

13. The method of claim 12, further comprising any one or more of:
- by the processing circuitry (602), obtaining (301) the one or more preset operations as input, preferably as a user input, and, in response to obtaining the one or more preset operations, determining (302) a required State of Charge, SoC, of the battery (20) and wherein determining whether the charging status is sufficient for the vehicle (1) to perform the one or more preset operations comprises determining whether or not a current SoC of the battery (20) meets the required SoC of the battery (20),
- by the processing circuitry (602), selecting (306) the one or more receiving units (40) from a set of receiving units, each receiving unit (40) being associated with a respective operator, and/or
- by the processing circuitry (602), upon determining that the charging status is not sufficient for the vehicle (1) to perform the one or more preset operations, predicting (305) a time when the charging status will be sufficient for the vehicle (1) to perform the one or more preset operations, the prediction being based on an availability of respective operators associated with the receiving units (40), and/or based on a time schedule (60) of the respective operators associated with the receiving units (40), and selecting (306) the one or more receiving units (40) based on the predicted time and the time schedule (60) of the respective operators.

14. A computer program product comprising program code for performing, when executed by the processing circuitry (602), the method of any of claims 12-13.

15. A non-transitory computer-readable storage medium comprising instructions, which when executed by the processing circuitry (602), cause the processing circuitry (602) to perform the method of any of claims 12-13.
